Europäisches Patentamt

European Patent Office

Office européen des brevets

(11) Veröffentlichungsnummer : **0 064 186**
**B1**

(12) **EUROPÄISCHE PATENTSCHRIFT**

(45) Veröffentlichungstag der Patentschrift :
09.07.86

(51) Int. Cl.⁴ : **F 03 D  9/00**, F 03 B 13/12

(21) Anmeldenummer : 82103160.6

(22) Anmeldetag : 15.04.82

(54) **Kombinierte Wind- und Wellen-Nutzungsanlage.**

(30) Priorität : 16.04.81 DE 3115491

(43) Veröffentlichungstag der Anmeldung :
10.11.82 Patentblatt 82/45

(45) Bekanntmachung des Hinweises auf die Patenterteilung : 09.07.86 Patentblatt 86/28

(84) Benannte Vertragsstaaten :
AT BE CH DE FR GB IT LI NL SE

(56) Entgegenhaltungen :
DE-A- 2 639 732
DE-A- 2 758 177
DE-A- 2 813 141
DE-A- 2 905 569
FR-A- 1 172 424
FR-A- 2 355 178
GB-A- 1 538 629
NL-A- 7 807 654

(73) Patentinhaber : Jöst, Bernhard
Traminerweg 4
D-6800 Mannheim 31 (DE)

(72) Erfinder : Jöst, Bernhard
Traminerweg 4
D-6800 Mannheim 31 (DE)

(74) Vertreter : Zipse & Habersack
Lessingstrasse 12
D-7570 Baden-Baden (DE)

## Beschreibung

Die Erfindung betrifft eine Anlage zur kombinierten Ausnutzung der Wind- und Wellenenergie im Bereich des Meeres, bestehend aus auf einem schwimmenden, verankerten Körper angeordneten, auf Achsen drehbaren Windrädern und an Pendelgestängen angeordneten, auf der Meeresoberfläche ruhenden, auf- und abbewegbaren Schwimmern.

Aus dem Stand der Technik sind rentable Großanlagen zur Nutzung der Wind- oder Wellenenergie nicht bekanntgeworden. Ursachen für das Nichtvorhandensein von rentablen Großanlagen bei der Wind- und Wellennutzung sind die schwankenden Windstärken. Selbst an der windstarken Nordseeküste kann eine Großanlage nur ca. 90 Tage im Jahr die volle Leistung bringen. Die gleiche Zeit ist die Anlage außer Betrieb, weil die Mindestwindstärke sechs zum Anlaufen fehlt.

Da die Generatorleistung mit steigender Umdrehungszahl wächst, sind Langsamläufer, wie Windmühlen und amerikanische Windräder, für die größere Stromerzeugung nicht mehr rentabel. Schnelllaufende Propeller benötigen aber größere Windstärken.

Aber auch für die Wellennutzung wurden bisher mehrere Versuche unternommen, wobei insbesondere Schwimmer an einer Pendelaufhängung verwendet wurden.

Aus der DE-A-27 58 177 ist eine horizontale Wind- und Wasser-Turbine bekanntgeworden, bei welcher unter einer schwimmenden Insel (Ponton) im Wasser eine Wasserturbine angebracht ist und auf der Plattform der Insel eine Windturbine vorgesehen ist, wobei beide Turbinen zu Zwecken des Generatorantriebs, der sich im Zentrum befindet, gegenläufig angetrieben werden. Auch bei dieser Anmeldung handelt es sich um eine direkte Kupplung der Wasserturbine und der Windturbine mit dem Generator, wobei die o. g. Grundsätze bezüglich der Langsamläufer Gültigkeit haben.

Der vorliegenden Erfindung liegt die Aufgabe zugrunde, eine rentable, kombinierte Wind- und Wellennutzungsanlage der beiden Energiearten zu schaffen, die aus an sich bekannten, drehbaren Windrädern und an sich bekannten, an Pendelgestängen angeordneten Schwimmern zur Aufnahme der Wellenenergie besteht, die auf einem schwimmenden, verankerten Körper angeordnet sind.

Zur Lösung der gestellten Aufgabe wird eine Anlage zur kombinierten Ausnutzung der Wind- und Wellenenergie im Bereich des Meeres, bestehend aus auf einem schwimmenden, verankerten Körper angeordneten, auf Achsen drehbaren Windrädern und an an Pendelgestängen angeordneten, auf der Meeresoberfläche ruhenden, auf- und abbewegbaren Schwimmern vorgeschlagen, welche dadurch gekennzeichnet ist, daß sowohl die Achsen der Windräder unmittelbar über Kurbelwellen und Kurbelstangen als auch die an Pendelgestängen angeordneten Schwimmer unmittelbar über Zahnsegmente und Kurbelzapfen jeweils zum Antrieb mit Kolbenpumpen verbunden sind, die über eine Saugleitung Meerwasser ansaugen und es über Druckleitungen einem oder mehreren, mit einem Generator verbundenen Druckkessel/n zuführen.

Das Wesentliche der Anlage gemäß der Erfindung wird also darin gesehen, daß die Achse der Windräder unmittelbar über Kurbelwellen und Kurbelstangen, also ohne Zwischenübertragung mit Zahnradkupplungen od. dgl., und auch die an Pendelgestängen angeordneten Schwimmer unmittelbar über Zahnsegmente und Kupplungszapfen jeweils auf eine langsamlaufende Kolbenpumpe einwirken, wobei über eine Saugleitung das Wasser angesaugt und über Druckleitungen einem oder mehreren Sammelbehälter/n zugeführt wird, von wo aus der Generator gespeist wird.

In den Unteransprüchen sind vorteilhafte Weiterbildungen der Erfindung beschrieben.

Bei der Anlage gemäß der Erfindung können also Langsamläufer als Windräder benutzt werden, die schon bei einer Windstärke eins anlaufen, ohne daß unwirtschaftlich große Übersetzungen auf andere Art für die Stromerzeugung brauchbar gemacht werden. Ferner wirken auf die gleichen Pumpen mit ihren Druckleitungen und Druckkesseln, die auf gemeinsame Generatoren arbeiten, neuartige Schwimmer mit Schaufeln ein, wobei Pumpen und Wasserleitungen die Wellenkraft bis zu den Maschinenräumen über Druckkessel zu Generatoren im Schiffsinneren übertragen, so daß im Außenbereich der Anlage gemäß der Erfindung keine empfindlichen Maschinen oder elektrischen Leitungen erforderlich sind. Die außenliegenden Wasserrohre und Pumpen sind wasserunempfindlich und vertragen alle Überspülungen. Dabei können alle Wellen zwischen 0,5 und 10 Metern voll ausgenutzt werden. Bei kleineren Wellen arbeiten die doppeltwirkenden Kolbenpumpen wie Flügelpumpen, deren Schwengel nur kurz hin und her bewegt wird. Bei großen Wellen arbeitet der Kolben in voller Zylinderlänge, eventuell mit mehreren Hüben pro Welle.

Folgende weitere Vorteile ergeben sich durch die auf die Pumpen einwirkenden Windräder.

1. Man kann beliebig viele kleinere Windräder auf einen Stromerzeuger arbeiten lassen.

2. Auch die geringste Leistung der Windräder wird nicht, wie bei anderen Systemen, gekappt, sondern voll verwertet.

3. Der Generator braucht für Windstärkenschwankungen keine komplizierten Steuervorrichtungen für konstante Frequenz, da die Druckkessel des kostenlos besorgen.

4. Auf diese Art können Höchstdrücke erzeugt werden, die die größten und leistungsfähigsten Generatoren antreiben, die auf keinem Propellerturm stationiert werden können.

5. Langsamere Windräder haben viel weniger Verschleiß als solche mit 300 km/Stunde an den Flügelspitzen und bringen bei gleicher Bereitstellungsfläche und gleicher Windstärke dieselbe Leistung, nämlich : 1 Rad von 10 m Durchmesser leistet bei Windstärke fünf = 2.38 kW, und vier Räder von 5 m Durchmesser leisten $4 \times 0.59$ kW = 2.36 kW. Da der Langsamläufer im Gegensatz zum Schnelläufer aber schon bei den geringsten Windstärken Leistung bringt, ist er im Jahresdurchschnitt viel produktiver.

6. Auf der Erde stationierte Generatoren können mehr als 10mal größer bemessen werden, als solche auf Turmspitzen.

7. Die Mehrausgaben für Pumpen und Kessel werden durch entfallende Reguliereinrichtungen wieder ausgeglichen.

8. Wird ein ca. 100-m-Propeller schadhaft, wie das bisher in spätestens 3 Jahren der Fall war, dann muß die ganze Anlage für lange Zeit stillgelegt werden. Bei Langsamläufern mit kleinen Flügeln ist das eine Angelegenheit von ein paar Stunden, ohne Betriebsunterbrechung. Da eine Gitterwand für 100 Langsamläufer von 10 m Durchmesser nicht mehr kostet als ein Turm für einen 100-m-Flügel mit Generator, ist die Anlage gemäß der Erfindung wirtschaftlicher.

Die Anlage gemäß der Erfindung kann im Baukastensystem, beispielsweise in Werften, hergestellt und an den Bestimmungsort geschleppt werden. In einem Verbundnetz von der Nordspitze Norwegens bis Südafrika, mit Seekabeln verbunden, könnten sogar die geografisch bedingten Windflauten überbrückt werden. Die Anlage gemäß der Erfindung ist natürlich auch für alle anderen Küsten einsetzbar. Weitere Einsätze sind möglich als :

1. weitgehend selbständige Stützpunkte auf den Meeren für Schiffahrts- und Fluglinien,

2. Wellenbrecher vor gefährdeten Inseln, wie z. B. Helgoland,

3. Fabriken für die Fischbearbeitung in abgelegenen Fischgründen,

4. Fabriken für die Herstellung von Wasserstoff usw.,

5. Forschungsstützpunkte in allen Meeren,

6. Fabriken für alle strom- oder wasserintensiven Arbeitsgänge, wie Aluminiumherstellung usw.,

7. Fabriken für gefährliche oder übelriechende Stoffe,

8. absolut wellenfreie Anlegeplätze für Schiffe aller Art,

9. Wasserstoff-Tankstellen mit eigener Wasserstoffherstellung für Flugzeuge und Schiffe mit Wasserstoffantrieb,

10. Leuchtfeuer- und Nebelhorn-Warnstationen usw.,

11. Meerwasserentsalzungsanlage und Landbewässerung usw.

Anhand der Zeichnungen soll am Beispiel bevorzugter Ausführungsformen der Gegenstand der Erfindung näher erläutert werden.

In den Zeichnungen zeigt

Figur 1 eine Teilansicht einer kombinierten Wind- und Wellen-Nutzungsanlage quer zur Windrichtung.

Figur 2 zeigt eine Teilansicht der Maschinenräume und der Außenbrücke von oben.

Figur 3 zeigt eine größere Teilansicht mit vielen Schwimmer-Pumpen-Aggregaten und Windräderaufbauten.

Figur 4 zeigt einen Ankermast für die schwimmende Anlage.

Figur 5 zeigt eine Ansicht der Ausführungsform von Fig. 3 von oben.

Figur 6 zeigt ein Gerüst mit Windflügeln als Ausschnitt der Breitseite.

Figur 7 zeigt einen Windflügel von Fig. 6 von oben gesehen.

Figur 8 zeigt eine Spezialverbindung für die Einzelrohrachsen zwischen den Gerüststockwerken.

Figur 9 zeigt eine schematische Darstellung des Windantriebs über Windräder, Pumpen, Druckkessel und Turbogeneratoren.

Figur 10 zeigt einen Ausschnitt aus einer Vorderfront mit horizontal gelagerten, neuartigen Windantrieben.

Figur 11 zeigt eine Seitenansicht von Fig. 10.

Figur 12 zeigt eine schematische Darstellung der Wirkungsweise bei Verwendung der Flügel von Fig. 11.

Figur 13 zeigt eine Hebeeinrichtung zur Nutzung der Schubkraft der Wellen.

Figur 14 zeigt einen Pendelschwimmer ähnlich der Fig. 13.

Figur 15 zeigt zwei Kolbenpumpen, die von einem Pendeldrehschwinger angetrieben werden.

Figur 16 zeigt einen Pendelschwinger mit außenliegender Kurbelstange.

Figur 17 zeigt eine Seitenansicht von Fig. 16.

Figur 18 zeigt die Seitenaufhängung der Vertikalflügel mit Drehfedern.

Figur 19 zeigt eine drehbar gelagerte Flügelbefestigung wie Fig. 18, von oben gesehen.

Figur 20 zeigt die Anordnung der Flügel mit fast unbehindertem Winddurchgang bei Orkan.

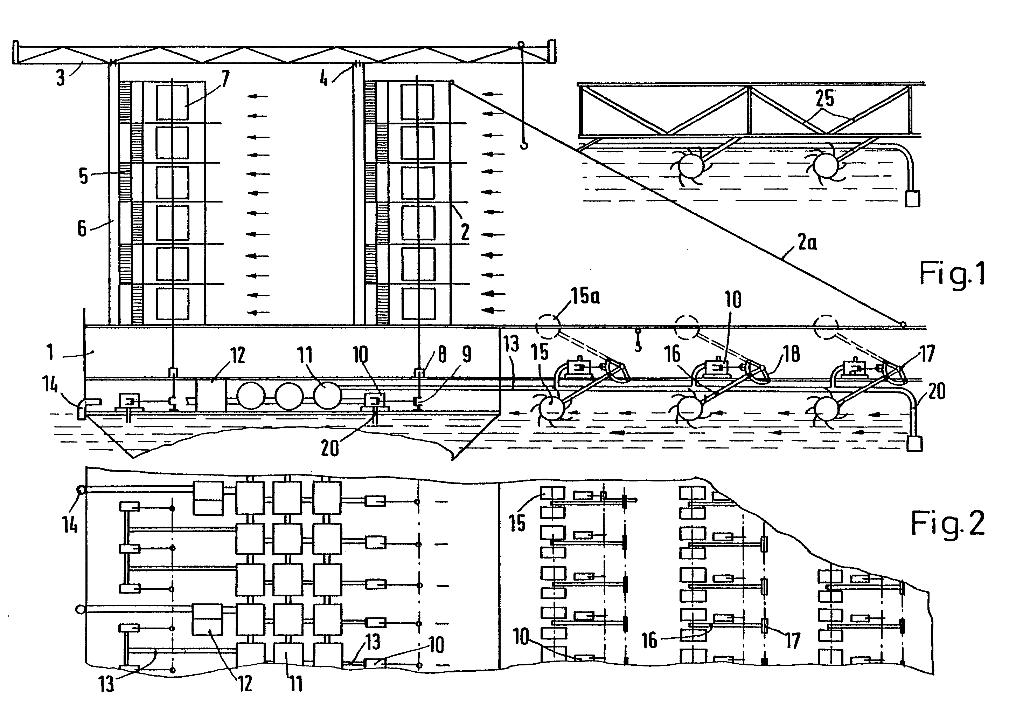

Aus Fig. 1 ergibt sich die Anlage zur kombinierten Ausnutzung der Wind- und Wellenenergie, die besteht aus einem schwimmenden, verankerten Körper 1 mit Maschinenräumen für Pumpen, Druckkessel, Generatoren und Zubehör etwa in der Größe eines Tankers von 250 000 Tonnen, ca. 350 m Länge und ca. 50 m Breite.

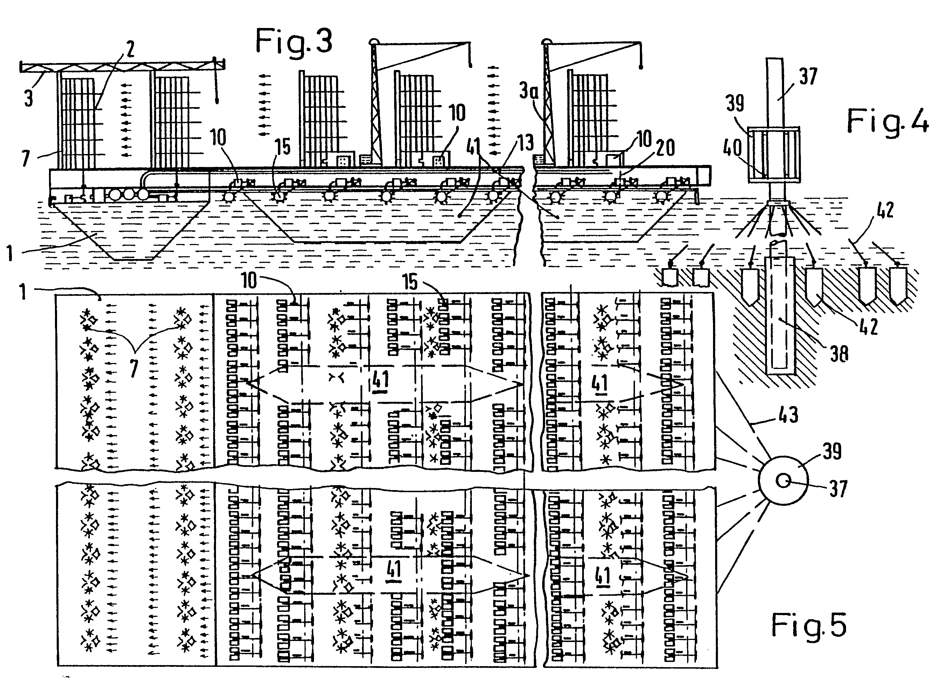

Auf dem Oberdeck befinden sich winddurchlässige Traggerüste 2 auf der ganzen Länge des Schiffes in beliebiger Höhe von ca. 40 m an aufwärts zur Aufnahme der Windräder 7. Zur Beförderung von Ersatzteilen usw. sind Laufkräne oder Turmkräne 3 beziehungsweise 3a, Rollen 4 für einen Krahn, Stahltreppen 5 oder Leitern 6 sowie bei einem hohen Gerüst Fahrstühle vorgesehen. Die Lager 8 dienen zur Aufnahme für die Vertikalachse der Windräder an allen Eckendurchgängen. Die Kurbelwelle 9 dient zum direkten Antrieb der Pumpen ohne Kegelräder, wobei ein Getriebe zur Hubzahlregulierung vorgesehen sein kann. Im unteren Teil sind Pumpen 10, Druckkessel 11 und ein Generator 12 sowie Druckleitungen 13 von den Pumpen zu den Kesseln sowie ein Turbinenauslauf 14 vorgesehen. Die Schwimmer 15 sind mit den einzelnen Pumpen gekoppelt und mit einem wasserabweisenden Kunststoff ausgeschäumt, damit sie auch bei Leck unsinkbar sind. Mit 15a ist die obere Stellung des Schwimmers bei hohem Wellengang bezeichnet, wobei die Schwimmer an Pendelgestängen 16 befestigt sind, die in Lagern 17 angeordnet sind und ein Zahnsegment 18 zum Antrieb des Zahnrads mit Kurbelzapfen für den Pumpenantrieb 19 (Fig. 3) sowie Saugleitungen 20 für die Pumpen aufweisen.

Gegen unerwünschte Wellenhöhe, beispielsweise über 10 m, werden am Anfang der Anlage in bestimmter Höhe Wellenbrecher angebracht, die normale Wellen ungehindert durchlassen.

In Fig. 2 ist eine Ansicht der Anlage von oben dargestellt, wobei die Pumpen 10, die Kessel 11, die Generatoren 12, die Druckleitungen 13, der Auslauf 14, die Schwimmer 15, das Pendelgestänge 16 und die Lager 17 für die Pendel in ihrer Reihung sichtbar sind. Auf den offenen Ausladungen befinden sich nur Pumpen und Wasserleitungen, die, ohne Schaden zu nehmen, vom Wasser überspült werden können.

Aus Fig. 3, die eine größere Teilansicht der Anlage darstellt, ist der am Ende der Anlage querstehende, schwimmende Körper 1 mit Maschinenräumen und Aufbauten, die Traggerüste 2 für die Windräder und die Brücken- oder Turmdrehkräne 3, 3a sowie die Windflügel 7, die Pumpen 10, die Druckleitungen 13 zu den Druckkesseln, die Pendelschwimmer 15, die Saugleitung 20 ersichtlich, wobei möglichst schmale Tragschiffe 41 für die Brükkenaufbauten vorgesehen sind.

Der in Fig. 4 dargestellte Ankermast 37, 38 aus Stahlbetonrohr kann an Ort und Stelle mit Beton ausgegossen werden. Der Teil über dem Wasser ist rund und glatt, damit sich der Ringkorb 39 auf seinen Rollen und Zapfen 40 leicht drehen und nach oben und unten bewegen kann. Der Ringkorb ist mit einem wasserabweisenden Kunststoff gefüllt, so daß er immer an der Wasseroberkante schwimmt. Er trägt die Haltetrosse der Anlage, so daß sich diese immer automatisch in den Wind stellen. Der Ankermast wird durch im Meeresgrund verankerte Ketten, Trosse oder Eisenstangen 42 gehalten.

Fig. 5, die eine Ansicht der Anlage von Fig. 3 von oben darstellt, zeigt die Windflügel 7, die Pumpen 10, die Schwimmer 15 und die möglichst weit auseinanderliegenden schmalen Tragschiffe 41, die die Wellen wenig behindern.

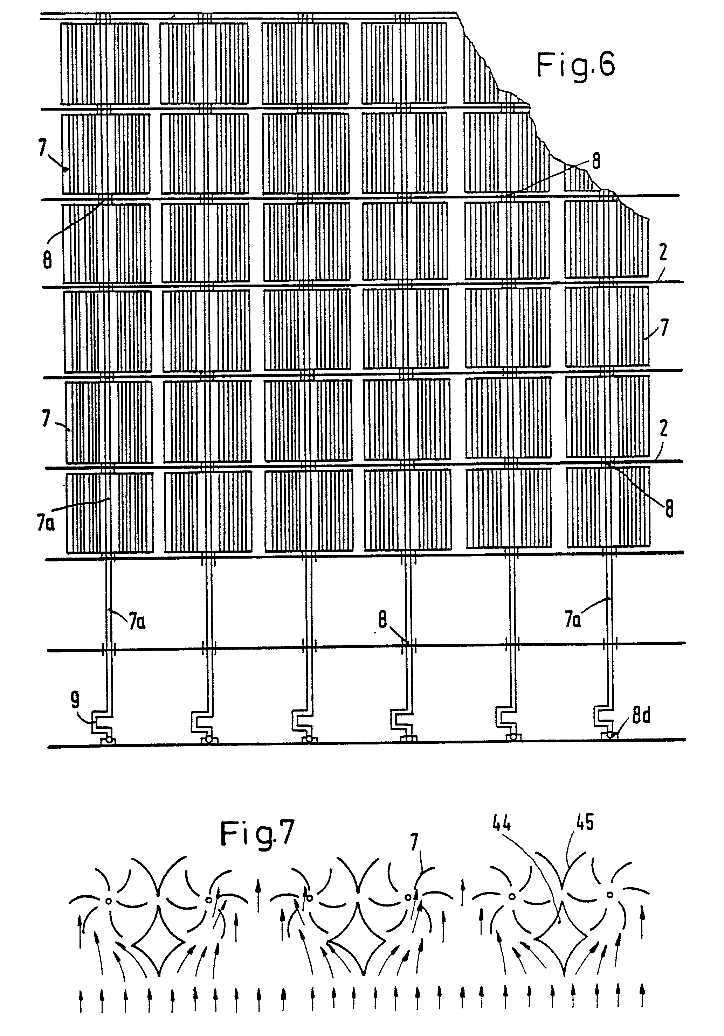

Das in Fig. 6 dargestellte Traggerüst 2 nimmt die Windflügel 7 mit den nach unten verstärkten Vertikalrohrachsen 7a auf, wobei Lager 8 an jedem Deckendurchgang und Fußlager 8d vorgesehen sind. Die Kurbelwelle 9 dient zum Pumpenantrieb.

In Fig. 7 sind die Windflügel gemäß Fig. 6, von oben gesehen, dargestellt, wobei in den anderen Figuren nicht eingezeichnete Windleitflächen vorgesehen sind. Die Windflügel 7 weisen Spalte zwischen Achse und Flügel für den Winddurchgang zur Beaufschlagung der hinteren Flügel auf. Mit 44 sind sternförmige Windleitwände bezeichnet, die den Wind von den gegenläufigen Flügeln abhalten und ihn in günstige Richtung auf die Arbeitsseite der Windflügel leiten soll. Die hinteren Leitwände 45 verhinder gegenseitig störende Luftströmungen der beiden gegenläufigen Windräder jeder Gruppe.

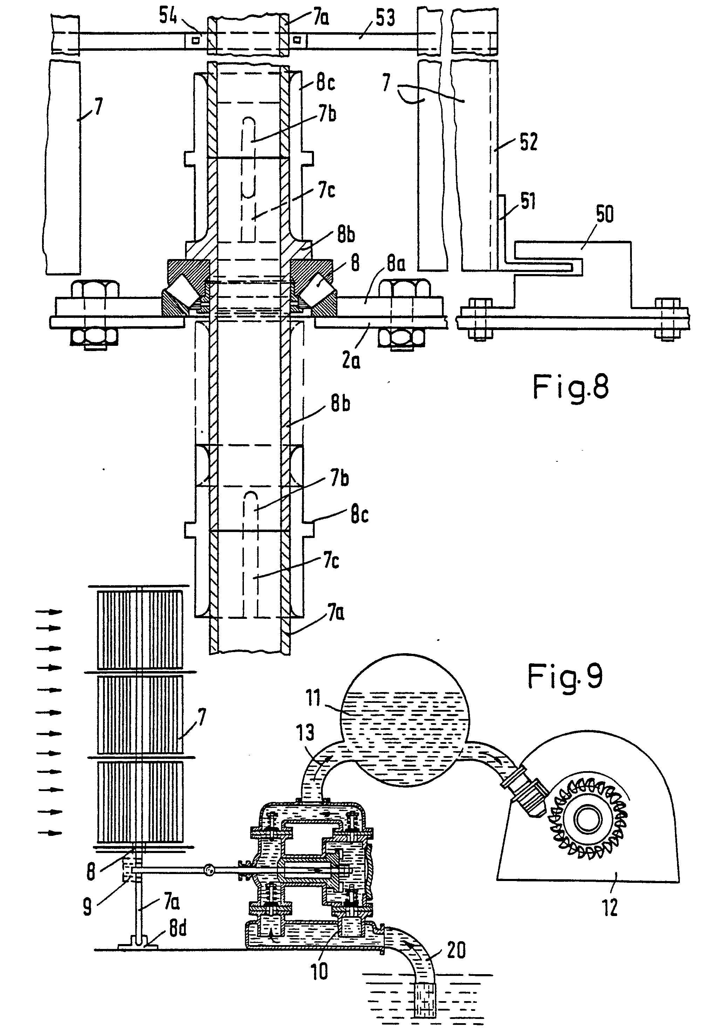

Die in Fig. 8 gezeigte Spezialverbindung für die Einzelrohrachsen zwischen den Gerüststockwerken ermöglicht den schnellen Ein- und Ausbau der Achsen und Flügel in jedem Stockwerk, ohne daß die darunter liegenden Flügel außer Betrieb gesetzt werden müssen. Durch die leicht anzubringende Aus- und Einrückvorrichtung werden beide Muffen 8c, das heißt die obere und untere, gleichzeitig nach oben gedrückt, und die Achse mit den Flügeln eines Stockwerkes ist ausgekuppelt und frei zum Ausbau. Hierzu ist an der Vertikalrohrachse 7a oben und unten eine Nut 7b vorgesehen, die zur Hälfte in der Rohrachse 7a und der Verbindungshülse 8b angeordnet ist. In dieser Nut ist ein Keil vorgesehen, und die Verbindungshülse 8b ist mittels des Lagers 8 im Boden 2a eines Stockwerkes angeordnet. In jeder Muffe 8c ist eine Nut 7c vorgesehen, die am unteren Ende der Muffe zum Einschieben über den Keil offen und am oberen Ende geschlossen ist. Die Muffe wird so genau in der Mitte zwischen der Hülse 8b und dem Ende der Achse 7a fixiert. Das Lager 8 weist einen auf dem Boden 2a liegenden Haltering 8a auf.

Mit 50 ist eine Magnetbremse bezeichnet, die einzeln, in Gruppen und alle zusammen durch eine Fernsteuerung betätigt werden können, wobei der Bremsring 51 an den Verstärkungsrippen 52 befestigt ist. Die Tragschienen 53 halten die Flügel, und die Rohrschellen 54 dienen zur Tragschienenbefestigung.

Fig. 9 zeigt die schematische Darstellung des Windantriebs über Windräder, Pumpen, Druckkessel und Generatoren. Die durch den Wind angetriebenen Windflügel 7 mit ihrer Vertikalachse 7a, die ihrer Beanspruchung entsprechend nach unten verstärkt ist und in Zwischenlagern 8 und einem Fußlager 8d gelagert ist, treiben mittels der Kurbelwelle 9 die Pumpe 10 an. Die Pumpe 10 saugt über die Saugleitung 20 das Wasser an und drückt es über die Druckleitung 13 in den Druckkessel 11, der mit dem Generator 12 in Verbindung steht.

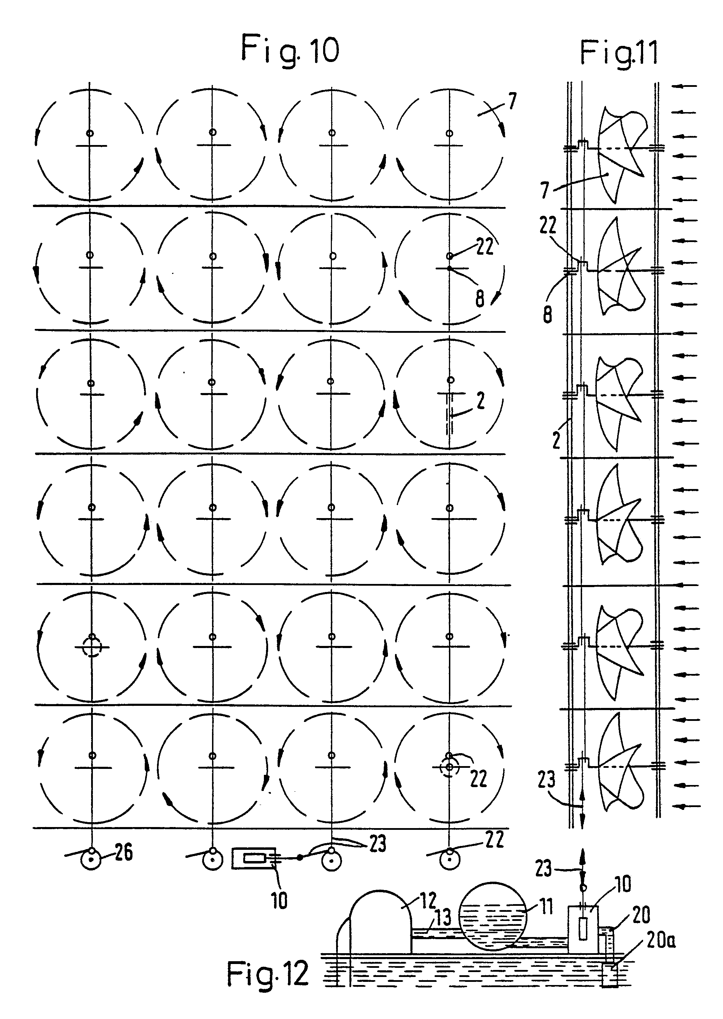

Fig. 10 zeigt einen Ausschnitt aus der Vorderfront des horizontal gelagerten, neuartigen Windantriebes, wobei die Flügel 7 so eingestellt sind, daß jedes Nachbarrad daneben sich gegenläufig umdreht, damit der Luftstrom an den Berührungspunkten gleichlaufend ist und sich nicht gegenseitig abbremst. Die Windflügel sind so ausgebildet, daß der Wind immer von der Mitte der Windflügel zu den wirksamen Spitzen geleitet wird und damit das größte Drehmoment bewirkt. Die Vorteile dieses Systems bestehen in der größen Luftstromdurchlässigkeit, in der höchsten Leistungsabgabe und im Wegfall der Windleitflächen. Die Windflügel 7 sind in einem winddurchlässigen Traggerüst 2 in Lagern 8 angeordnet und stehen über Kurbelwellen 22 und Kurbelwellenstangen 23 mit den Pumpen 10 in Verbindung.

Die in Fig. 10 gezeigte Anordnung ist in Fig. 11 in Seitenansicht dargestellt, wobei das Traggerüst 2, die Windflügel 7, das Lager 8, die Kurbelwellen 22 und die Kurbelstangen 23 sichtbar sind.

Die in Fig. 12 dargestellte Wirkungsweise sieht bei Verwendung der Flügel 7 Kolbenpumpen 10 vor, wobei der Antrieb eventuell direkt, ohne spezielle Kurbelwelle, erfolgen kann. Die Pumpe 10 saugt über die Saugleitung 20 mit dem Saugkorb 20a das Wasser an und befördert es in den Druckkessel 11, und von hier wird das Wasser unter Druck über die Druckleitung 13 zum Generator 12 geleitet.

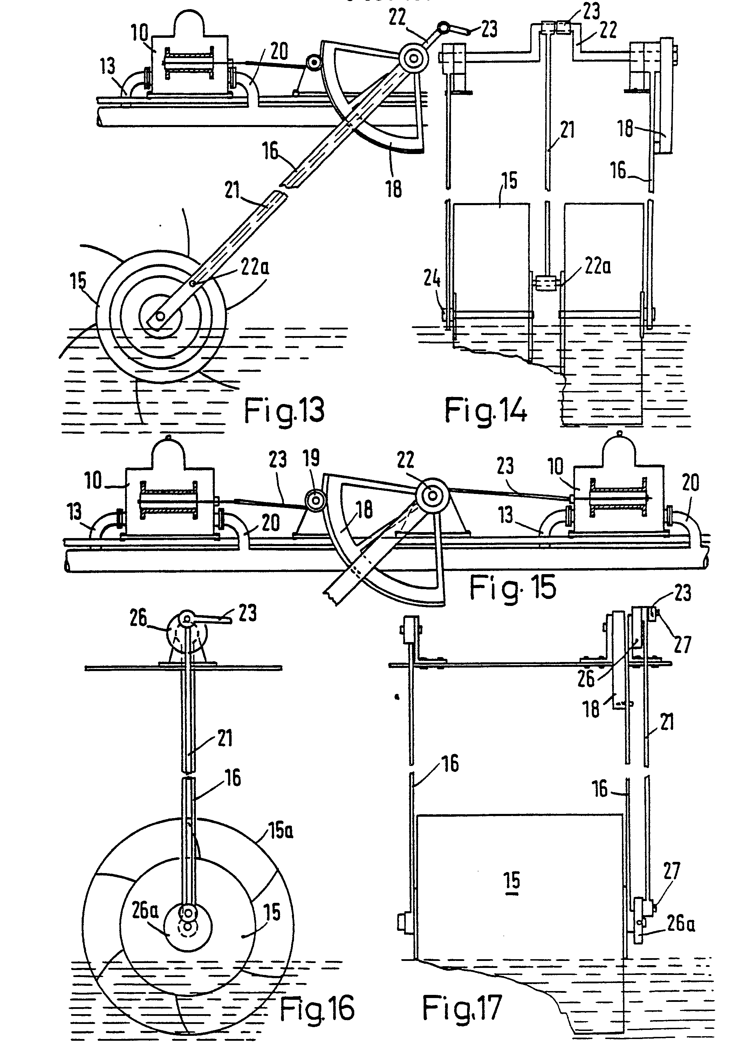

Fig. 13 zeigt die Anordnung zur Ausnutzung der Hebekraft und der Schubkraft der Wellen, wobei die Schwimmer 15 mit Schaufeln versehen sind, wobei die Drehbewegung des Schaufelschwimmers über ein Kurbelgestänge 21 eine zweite Pumpe antreibt. Ferner setzen die Schaufeln der Schubkraft des Wassers eine größere Angriffsfläche entgegen, wodurch auch die Hebekraft der Wellen bedeutend verstärkt wird. Das Zahnsegment 18 und das Pendelgestänge 16 sind fest miteinander verbunden und drehbar auf einer Kurbelwelle 22 gelagert. Wie sich auf Fig. 13 in Verbindung mit Fig. 14 ergibt, ist die mit dem Schwimmer 15 verbundene Schwimmerachse 24 drehbar im Pendelgestänge 16 gelagert. Die Kurbelstange 21, die Kurbelwelle 22, der Kurbelwellenzapfen 22a und die Antriebsstange 23 dienen zum Antrieb der zweiten Kolbenpumpe 10.

In Fig. 15 ist dargestellt, wie zwei Kolbenpumpen von einem Pendeldrehschwinger angetrieben werden. Der Antrieb erfolgt in gleicher Weise über die Antriebsstangen 23 von der Kurbelwelle 22.

In Fig. 16 ist ein Pendelschwinger mit außenliegender Kurbelstange vorgesehen, wobei der Schwimmer 15 über die obere Kurbelscheibe 26 und die untere Kurbelscheibe 26a über die Antriebsstange 23 die zweite Kolbenpumpe antreibt. Die Schaufeln können mit einem Verstärkungsring 15a versehen sein. Mit 16 sind die Pendelgestänge bezeichnet.

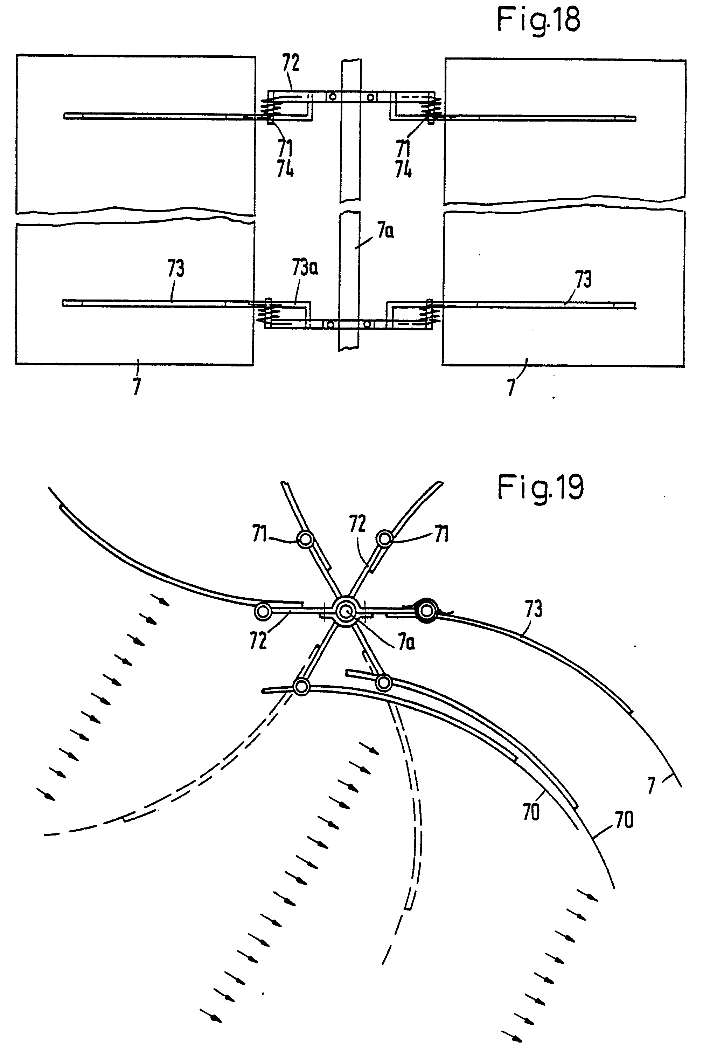

Fig. 17 zeigt eine Seitenansicht von Fig. 16, wobei die Anordnung des Schwimmers 15 mit den Pendelgestängen 16, dem Zahnsegment 18, der Kurbelstange 21, der Antriebstange 23 zur Kolbenbenpumpe, der oberen Kurbelscheibe 26 und der unteren Kurbelscheibe 26a sowie des Kurbelzapfens 27 sichtbar ist.

In Fig. 18 ist die Sicherheitsaufhängung der Vertikalflügel mit Drehfedern beschrieben. Die Flügel 7 befinden sich auf der Vertikalachse 7a, wobei die Achse 71 für die Drehflügel das Lager und die Drehfedern aufweist. Mit 72 sind Tragschienen bezeichnet, die an der Vertikalachse befestigt sind, wobei Verstärkungsrippen 73 mit Aufhängung und Verlängerung einen Anschlag 73a für die Justierung und Arbeitsstellung bilden. Der Zwischenraum 74 dient für den Winddurchgang zur Beaufschlagung der hinteren Flügel.

Aus Fig. 19 ist die drehbar gelagerte Flügelbefestigung entsprechend Fig. 18, von oben gesehen, ersichtlich. Der Flügel 7 ist in Normalstellung, während die Flügel 70 in zurückgeschwungener Sicherheitsstellung bei Orkan, oder abgebremst bei Normalwind, dargestellt sind. Die Tragschienen 72 sind mit Rohrschellen an der Vertikalachse befestigt.

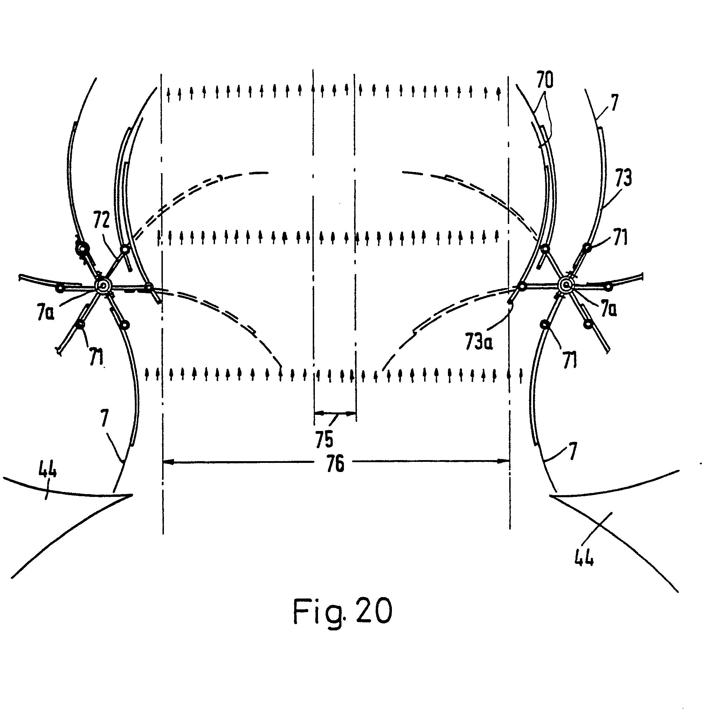

Fig. 20 zeigt den fast unbehinderten Winddurchgang bei Orkan. Die Flügel 70 geben nach hinten nach, so daß sich der normale freie Winddurchgang 75 auf das Achtfache erweitert (siehe 76). Die Flügel 7 befinden sich in Normalstellung. Vor den Flügeln sind Windleitwände 44, ähnlich wie in Fig. 7, angeordnet. Der Anschlag 73a dient für die normale Arbeitsstellung der Flügel.

## Patentansprüche

1. Anlage zur kombinierten Ausnutzung der Wind- und Wellenenergie im Bereich des Meeres, bestehend aus auf einem schwimmenden, verankerten Körper angeordneten, auf Achsen drehbaren Windrädern und an Pendelgestängen angeordneten, auf der Meeresoberfläche ruhenden, auf- und abbewegbaren Schwimmern, dadurch gekennzeichnet, daß sowohl die Achsen der Windräder (7) unmittelbar über Kurbelwellen (9, 22) und Kurbelstangen (23) als auch die an Pendelgestängen (16) angeordneten Schwimmer (15) unmittelbar über Zahnsegmente (18) und Kurbelzapfen jeweils zum Antrieb mit Kolbenpumpen (10) verbunden sind, die über eine Saugleitung (20) Meerwasser ansaugen und es über Druckleitungen (13) einem oder mehreren, mit einem Generator (12) verbundenen Druckkessel/n (11) zuführen.

2. Anlage nach Anspruch 1, dadurch gekennzeichnet, daß mehrere horizontal gelagerte Windräder (7) übereinander und nebeneinander in einem Gittergerüst angeordnet sind, deren Flügel (7) so eingestellt sind, daß jedes Nachbarrad daneben sich gegenläufig umdreht, wobei mehrere Achsen übereinanderliegender Windräder (7) über je einer Kurbelwelle (22) und Kurbelstangen (23) mit Kolbenpumpen (10) verbunden sind.

3. Anlage nach Anspruch 1, dadurch gekennzeichnet, daß in einem Traggerüst (2) Windflügel (7) mit nach unten verstärkten Vertikalrohrachsen (7a) angeordnet sind, die in Zwischenlagern (8) gelagert sind und die am unteren Ende eine Kurbelwelle (9) zum Pumpenantrieb aufweisen.

4. Anlage nach Anspruch 3, dadurch gekennzeichnet, daß die Windflügel (7) Spalte zwischen Achse und Flügel für den Winddurchgang zur Beaufschlagung der hinteren Flügel aufweisen, an denen sternförmige Windleitwände (44) angeordnet sind, die den Wind von den gegenläufigen Flügeln abhalten, und wobei hintere Leitwände (45) zum Verhindern gegenseitig störender Luftströmungen der beiden gegenläufigen Windräder jeder Gruppe vorgesehen sind.

5. Anlage nach Anspruch 3 oder 4, dadurch gekennzeichnet, daß die Vertikalrohrachse (7a) im Bereich des Bodens (2a) jedes Stockwerkes mit einer Nut (7b) mit Keil je zur Hälfte in der Rohrachse und in einer Verbindungshülse (8b) angeordnet ist, wobei die Nut (7c) in der Muffe (8c) am unteren Ende der Muffe zum Einschieben über den Keil offen ist und am oberen Keilende geschlossen ist, wobei ein Lager (8) mit dem Haltering (8a), der Verbindungshülse (8b) und der Schiebemuffe (8c) auf dem Boden (2a) des Stockwerkes aufliegt.

6. Anlage nach den Ansprüchen 3 bis 5, dadurch gekennzeichnet, daß an den Verstärkungsrippen (52) ein Bremsring (51) befestigt ist, der mit einer Magnetbremse (50) zur Stillsetzung der Anlage zusammenarbeitet.

7. Anlage nach einem oder mehreren der vorhergehenden Ansprüche, dadurch gekennzeichnet, daß die an der Vertikalachse (7a) angeordneten Flügel (7) mit einer Sicherheitsaufhängung versehen sind, die aus einer Achse (71) mit einer Drehfeder besteht, die an der Vertikalachse (7a) befestigten Tragschienen (72) angeordnet ist, wobei Verstärkungsrippen (73) mit Aufhängung und Verlängerung ein Anschlag (73a) für die Justierung und Arbeitsstellung bilden.

8. Anlage nach Anspruch 1 oder 2, dadurch gekennzeichnet, daß die Schwimmer (15) zur Ausführung einer Drehbewegung mit Schaufeln versehen sind, wobei die Drehbewegung über ein Kurbelgestänge (21) eine zweite Kolbenpumpe (10) antreibt, wobei das Zahnsegment (18) und das Pendelgestänge (16) fest miteinander verbunden und drehbar auf einer Kurbelwelle (22) gelagert sind und wobei die Kurbelstange (21), die Kurbelwelle (22), der Kurbelwellenzapfen (22a) und die Antriebsstange (23) zum Antrieb der zweiten Kolbenpumpe (10) dienen.

9. Anlage nach Anspruch 8, dadurch gekennzeichnet, daß ein Pendelschwinger mit außenliegender Kurbelstange vorgesehen ist, wobei der Schwimmer (15) über eine obere Kurbelscheibe (26) und eine untere Kurbelscheibe (26a) über die Antriebsstange (23) die zweite Kolbenpumpe (10) antreibt.

**Claims**

1. Device for the combined harnessing of wind and wave energy in the vicinity of the sea, consisting of wind-wheels arranged on a floating, anchored body and which are rotatable on axles, and floats arranged on swinging arms, which floats rest on the sea surface and can move upwards and downwards, characterised in that both the axles of the wind-wheels (7), directly via crankshafts (9, 22) and connecting rods (23), and also the floats (15) arranged on swinging arms (16), directly via toothed segments (18) and crank pins, are each linked to piston pumps (10) to provide the drive, which piston pumps suck in sea water via a suction pipe (20) and introduce it via pressure pipes (13) to one or more pressure vessels (11) linked to a generator (12).

2. Device according to claim 1, characterised in that several horizontally disposed wind-wheels (7) are arranged above and beside each other in a grid structure, whose blades (7) are so arranged that adjacent wheels rotate in an opposite sense to each other, wherein several axles of superimposed wind-wheels are linked to piston pumps (10), each via a crankshaft (22) and connecting rods (23).

3. Device according to claim 1, characterised in that wind-blades (7) are arranged in a support framework (2) with vertical tubular axles (7a) reinforced towards the bottom, which axles are disposed in intermediate bearings (8) and which are provided at their lower end with a crankshaft (9) to drive the pump.

4. Device according to claim 3, characterised in that the wind-blades (7) have gaps between axle and blade for the passage of wind to impinge on the blades behind, on which star-shaped wind deflectors (44) are arranged, which divert the wind from the oppositely-rotating blades and wherein rear deflectors (45) are provided to prevent mutually disruptive air currents of the two contrarotating wind-blades of each group.

5. Device according to claim 3 or 4, characterised in that the vertical tubular axle (7a) in the region of the base (2a) of each storey is arranged with a keyway (7b) with key, half in the tubular axle and half in a connecting sleeve (8b), wherein the keyway (7c) in the sleeve (8c) is open at the lower end of the sleeve for insertion over the key and is closed at the upper end of the key, wherein a bearing (8) with the retaining ring (8a), the connecting sleeve (8b) and the sliding sleeve (8c) rests on the base (2a) of the storey.

6. Device according to claims 3 to 5, characterised in that a brake ring (51) is secured to the reinforcing ribs (52), which brake ring cooperates with a magnetic brake (50) to stop the device.

7. Device according to one or more of the preceding claims, characterised in that the blades (7) arranged on the vertical axle (7a) are provided with a safety suspension which consists of an axle (71) with a torsion spring, which is arranged on support rails (72) secured to the vertical axle (7a), wherein reinforcement ribs (73) with suspension and extension form a guide for adjustment and operating position.

8. Device according to claim 1 or 2, characterised in that the floats (15) are provided with paddles to effect a rotary motion, wherein the rotary motion drives a second piston pump (10) via a crank connection (21), wherein the toothed segment (18) and the swinging arm (16) are securely connected together and are rotatably mounted on a crankshaft (22), and wherein the connecting rods (21), the crankshaft (22), the crankshaft pin (22a) and the drive rods (23) serve to drive the second piston pump (10).

9. Device according to claim 8, characterised in that a swinging arm is provided with an external connecting rod, wherein the float (15) drives the second piston pump (10) via an upper crank disc (26) and a lower crank disc (26a) via the drive rods (23).

**Revendications**

1. Installation pour l'exploitation combinée de l'énergie du vent et des vagues dans la région de la mer, formée de roues éoliennes disposées sur un corps flottant ancré et pouvant tourner sur des axes et des flotteurs disposés sur des tringlages oscillants, reposant sur la surface de la mer et pouvant monter et descendre, caractérisée en ce qu'aussi bien les axes des roues éoliennes (7), directement par l'intermédiaire de vilebrequins (9, 22) et de bielles (23) que les flotteurs (15) disposés sur des tringlages oscillants (16), directement par l'intermédiaire de secteurs dentés (18) et de manetons sont chaque fois reliés pour l'entraînement à des pompes à piston (10) qui aspirent de l'eau de mer par un tuyau d'aspiration (20) et l'amènent, par des tuyaux de refoulement (13), à une ou plusieurs chaudières à pression (11) reliées à un générateur (12).

2. Installation selon la revendication 1, caractérisée en ce que plusieurs roues éoliennes (7) montées horizontalement sont disposées les unes par dessus les autres et les unes à côté des autres dans une charpente en treillis, leurs ailes (7) étant réglées de telle sorte que chaque roue voisine située à côté tourne en sens opposé, plusieurs axes de roues éoliennes superposées (7) étant reliés à des pompes à piston (10), chacun par l'intermédiaire d'un vilebrequin (22) et de bielles (23).

3. Installation selon la revendication 1, caractérisée en ce que dans une charpente porteuse (2) sont disposées des ailes éoliennes (7) avec axes tubulaires verticaux (7a) renforcés vers le bas, qui sont montés dans des paliers intermédiaires (8) et qui présentent à l'extrémité inférieure un vilebrequin (9) pour l'entraînement des pompes.

4. Installation selon la revendication 3, caractérisée en ce que les ailes éoliennes (7) présentent des interstices entre axe et aile pour le passage du vent pour l'action sur les ailes postérieures, sur lesquelles sont disposées des parois directrices de vent (44) en forme d'étoile qui empêchent le vent d'atteindre les ailes marchant en sens opposé et des parois directrices postérieures (45) étant prévues pour empêcher des écoulements d'air se gênant mutuellement des deux roues éoliennes marchant en sens opposé de chaque groupe.

5. Installation selon l'une des revendications 3 et 4, caractérisée en ce que l'axe tubulaire vertical (7a), dans la région du plancher (2a) de chaque étage, est disposé, par une rainure (7b) avec une clavette, à moitié dans l'axe tubulaire et à moitié dans un manchon de liaison (8b), la rainure (7c) du manchon (8c) étant ouverte à l'extrémité inférieure du manchon pour l'insertion par-dessus la clavette et étant fermée à l'extrémité supérieure de clavette, un palier (8), avec l'anneau de retenue (8a), le manchon de liaison (8b) et le manchon coulissant (8c), reposant sur le plancher (2a) de l'étage.

6. Installation selon l'une des revendications 3 à 5, caractérisée en ce qu'aux nervures de renforcement (52) est fixé un anneau de freinage (51) qui coopère avec un frein magnétique (50) pour l'arrêt de l'installation.

7. Installation selon une ou plusieurs des revendications précédentes, caractérisée en ce que les ailes (7) disposées sur l'axe vertical (7a) sont munies d'une suspension de sécurité qui est formée d'un axe (71) avec un ressort de torsion qui est disposé sur des barres porteuses (72) fixées à l'axe vertical (7a), des nervures de renforcement (73) avec suspension et prolongement formant une butée (73a) pour l'ajustement et la position de travail.

8. Installation selon l'une des revendications 1 et 2, caractérisée en ce que les flotteurs (15) sont munis de pales pour l'exécution d'un mouvement de rotation, le mouvement de rotation entraînant par l'intermédiaire d'un embiellage (21) une deuxième pompe à piston (10), le secteur denté (18) et le tringlage oscillant (16) étant reliés solidairement entre eux et étant montés de manière à pouvoir tourner sur un vilebrequin (22) et la bielle (21), le vilebrequin (22), le maneton (22a) et la barre d'entraînement (23) servant à l'entraînement de la deuxième pompe à piston (10).

9. Installation selon la revendication 8, caractérisée en ce qu'il est prévu un oscillateur pendulaire avec bielle située extérieurement, le flotteur (15) entraînant par l'intermédiaire d'un flasque de manivelle supérieur (26) et un flasque de manivelle inférieur (26a) par l'intermédiaire de la barre d'entraînement (23), la deuxième pompe à piston (10).

Fig.1

Fig.2

0 064 186

Fig.3

Fig.4

Fig.5

0 064 186

Fig.6

Fig.7

Fig.8

Fig.9

## Fig. 10

## Fig. 11

## Fig. 12

**Fig. 13**

**Fig. 14**

**Fig. 15**

**Fig. 16**

**Fig. 17**

Fig.18

Fig.19

Fig. 20